Europäisches Patentamt

European Patent Office

Office européen des brevets

(19)

(11) Veröffentlichungsnummer: **0 193 020**
**B1**

(12) **EUROPÄISCHE PATENTSCHRIFT**

(45) Veröffentlichungstag der Patentschrift: **28.11.90**

(51) Int. Cl.⁵: **B 23 B 29/04**

(21) Anmeldenummer: **86101704.4**

(22) Anmeldetag: **11.02.86**

(54) Werkzeugeinrichtung mit wechselbarem Werkzeugkopf.

(30) Priorität: **01.03.85 DE 3507225**
**10.10.85 DE 3536183**

(43) Veröffentlichungstag der Anmeldung:
**03.09.86 Patentblatt 86/36**

(45) Bekanntmachung des Hinweises auf die
Patenterteilung:
**28.11.90 Patentblatt 90/48**

(84) Benannte Vertragsstaaten:
**AT FR GB SE**

(56) Entgegenhaltungen:
**EP-A-0 107 481**
**DE-A-3 309 922**
**US-A-2 684 249**

(73) Patentinhaber: **Fried. Krupp Gesellschaft mit
beschränkter Haftung
Altendorfer Strasse 103
D-4300 Essen 1 (DE)**

(72) Erfinder: **Mayer, Kurt, Dr.
Kantorie 58
D-4300 Essen 1 (DE)**
Erfinder: **Tack, Hans
Schopenhauerstrasse 20
D-5620 Velbert 1 (DE)**

(74) Vertreter: **Vomberg, Friedhelm, Dipl.-Phys.
Schulstrasse 8
D-5650 Solingen 1 (DE)**

**Beschreibung**

Die Erfindung betrifft eine Werkzeugeinrichtung nach dem Oberbegriff des Anspruchs 1. Diese Werkzeugeinrichtung ist aus der DE 3 309 922 A1 bzw aus der EP—A1 0 101 917 bekannt, wobei deren Kupplung ein Spannfutter enthält, welches koaxial zur Zugstange verläuft und in Schließstellung Vorsprünge der Zugstange umfaßt. Der Werkzeugkopf wird über die Zugstange, das Spannfutter und der Zugschaft in eine Formschlußverbindung (Hirth-Verzahnung) am Werkzeugschaft hineingezogen. Über die Hirth-Verzahnung ist zwar eine spielfreie Positionierung des Werkzeugkopfes möglich, aber nachteiligerweise keine günstige Absicherung gegen die relativ hohen durch Zerspanungskräfte auftretenden Momente. Durch die Eingriffswinkel der einzelnen Zähne bedingt, ergeben sich bei Belastung des Werkzeugkopfes axiale Abdrängkräfte, die die Positionierlage beeinträchtigen können. Zudem ist die verzahnte Kupplungsstelle sehr schmutzanfällig. Insgesamt müssen aus vorstehend genannten Gründen sehr hohe Zugkräfte aufgebracht werden, die über eine Spannpatrone auf den im Werkzeugkopf eingeschraubten Spannzapfen übertragen werden, die dadurch extrem hoch belastet sind.

Es ist ferner bekannt, den Werkzeugkopf über Kugeln, die bei Bewegung einer Zugstange in entsprechend geformte Ausnehmungen fallen können, zu arretieren. Die Kugeln üben jedoch auf die Kontaktfläche der Ausnehmung(en) eine punktförmige Presswirkung aus. Im übrigen führen auch hier Verschmutzungen der Ausnehmungen sowie die erforderlichen hohen Zugspannungen zu erheblichen Nachteilen.

Hieraus ergibt sich die Aufgabe, eine Werkzeugeinrichtung zu schaffen, welche die vorgenannten Nachteile nicht besitzt, insbesondere jedoch sowohl ein manuell als auch ein automatisch funktionssicheres Einspannen der Werkzeugköpfe ermöglicht, bei dem die Werkzeugköpfe leicht aufgeschoben und ebenso leicht dispositioniert werden können, wobei ein möglichst spielfreier Sitz des Werkzeugköpfes auf dem Werkzeuggrundhalter bei großer Steifigkeit des Werkzeugs ohne Zuhilfenahme weiterer Stützelemente, die bei rotierenden Werkzeugen oder bei der Innenbearbeitung eine Funktionseinschränkung bedeuten, gewährleistet ist und deren Spannvorrichtung noch Elements umfaßt, die einem eventuellen Verklemmen von Werkzeuggrundhalter und Werkzeugkopf entgegen wirken.

Die Aufgabe wird durch die im Anspruch 1 beschriebene Werkzeugeinrichtung gelöst. Diese besitzt eine Spannvorrichtung, worüber zwei oder mehr Spannelemente im Aufnahmezapfen radial zur Längsmittelachse des Aufnahmezapfens führbar sind. Diese Spannelemente besitzen Spannasen, die in eine entsprechend ausgebildete Nut des Werkzeugköpfes eingreifen. Sowohl die Nut als auch die Spannasen weisen Gleitflächen auf, die spitzwinklig zur Aufnahmezapfenlängsmittelachse angeordnet sind.

Durch diese Merkmale ist eine sichere Führung der Spannelemente gewährleistet. Darüber hinaus ist der Kraftaufwand beim Spannen verhältnismäßig niedrig, was durch die entsprechend abgeschrägten, sich gegenüberliegenden Flächen der Spannasen als auch der Nut bewirkt wird. Insbesondere ist noch hervorzuheben, daß ein Verkanten der Spannelemente im Werkzeuggrundhalter ausgeschlossen ist.

Nach der Erfindung ist es sowohl möglich, neben den üblicherweise verwendeten zylindrischen Aufnahmezapfen auch solche Aufnahmezapfen zu verwenden, die zumindest über einen Teil der seitlichen Mantelfläche konisch ausgebildet sind. Diese konische Ausbildung ermöglicht einen spielfreien Sitz als auch ein leichtes Aufschieben des Werkzeugköpfes. Bevorzugt wird die konische Ausgestaltung derart gewählt, daß der vom Mantel des konisch ausgebildeten Aufnahmezapfens mit dessen Längsmittelachse gebildete Keilwinkel 1 bis 10°, vorzugsweise 1,5 bis 4°, beträgt.

Der von den Gleitflächen der Nut im Werkzeugköpf bzw. den parallel gegenüberliegenden Flächen der Spannasen und der Längsmittelachse gebildete Keilwinkel beträgt bevorzugt 30 bis 80°, vorzugsweise 30 bis 60°.

Die Spannvorrichtung kann bei konischem oder zylindrischem Aufnahmezapfen entweder aus einer Spannschraube mit Rechts-Links-Gewinde bestehen, worüber zwei Spannelemente im Aufnahmezapfen gegenläufig und senkrecht zu dessen Längsmittelachse führbar sind oder sie kann bei zylindrischem Aufnahmezapfen aus einer Schubstange mit keilförmig angeordneten Spannflächen bestehen, die an schräg zu der mit dem Aufnahmezapfen gemeinsamen Längsmittelachse liegenden Gleitflächen der Spannelemente so abstützbar sind, daß eine Bewegung der Schubstange in Richtung des Werkzeugköpfes ein radiales Auseinanderrücken der Spannelemente bewirkt.

Um bei konischem Aufnahmezapfen dessen Lösen von der entsprechend geformten Aufnahmebohrung zu erleichtern bzw. erst zu ermöglichen, ist vorgesehen, die Spannelemente in ihrer dem Werkzeugköpf zugewandten Seite mit konisch auseinanderlaufenden Gleitflächen auszustatten, die einem konzentrisch zur Längsmittelachse des Aufnahmezapfens angeordneten, gleitend im Aufnahmezapfen geführten, vorzugsweise zylindrischen Abstoßelement als Abstützflächen dienen. Die den Gleitflächen der Spannelemente abgewandte Seite des Abstoßelements liegt vorzugsweise als Stirnfläche an der ebenen Grundfläche der Aufnahmebohrung im Werkzeugkopf an. Hiermit wird folgendem Umstand Rechnung getragen. Die Lage des Werkzeugköpfes wird zum einen durch die senkrecht zu dessen Schaftachse verlaufenden planaren Stirnflächen, zum anderen durch den kegeligen Aufnahmezapfen in Verbindung mit der kegeligen Aufnahmebohrung überbestimmt. Um einen einwandfreien Sitz des Werkzeugköpfes auf den Werkzeuggrundhalter zu gewährleisten, wird deshalb die Dimensionierung des Aufnahmezapfens geringfügig größer gewählt als die der Aufnahmebohrung, so daß beim Spannen des Werkzeuges die Mäntel des Aufnahmezapfens und der Aufnahmebohrung aufeinandergepreßt werden. Um ein schadloses Spannen zu ermöglichen, wird vorzugsweise ein oberflächengehärteter Werkstoff, z.B. Vergütungsstahl, der durch Nitrieren bzw. Einsatzhärten oberflächengehärtet ist, verwendet.

Das Aufpressen des Werkzeugköpfes auf den Aufnahmezapfen kann zu Schwierigkeiten beim Ablösen bzw. Wechseln des Werkzeugkopfes führen. Diese werden durch Verwendung des beschriebenen Abstoßelements beseitigt. Soll der Werkzeugköpf gelöst werden, so bewirkt eine Drehung der Spannschraube ein Aufeinanderbewegen der Spannkeile, die bei dieser Bewegung das Abstoßelement, das in Berührung mit den schräg verlaufenden Gleitflächen der Spannelemente steht, so bewegen, daß die diesen Gleitflächen abgewandte Seite, die Stirnfläche des Abstoßelements, gegen die Grundfläche der Aufnahmebohrung im Werkzeugkopf gepreßt wird und schließlich den Werkzeugköpf von dem Aufnahmezapfen drückt. Insbesondere durch eine Kombination der im Anspruch 1 genannten Merkmale ist also eine Werkzeugeinrichtung geschaffen, die ein leichtes Aufschieben wie leichtes Dispositionieren des Werkzeugkopfes ermöglicht, ohme daß auf einen spielfreien Sitz im gespannten Zustand verzichtet werden muß. Insbesondere hat es sich als vorteilhaft erwiesen, wenn die genannten Gleitflächen der Spannelemente so angeordnet sind, daß sie mit der Längsmittelachse des Aufnahmezapfens einen Winkel von 45 bis 80° bilden.

Nach einer Weiterbildung der Erfindung wird das Abstoßelement mit einer zentralen Bohrung versehen, die einen Kühlmittelzufluß zum Werkzeug ermöglicht.

Bei zylindrischem Aufnahmezapfen, wo sich in der Regel das Problem des Festklemmens des Werkzeugkopfes auf dem Aufnahmezapfen nicht stellt, dient das "Abstoßelement" als Sicherungselement, das zudem besagte Bohrung für den Kühlmittelzufluß aufweist.

Die Spannschraube besitzt, wie bereits erwähnt, ein Doppelgewinde, wobei die beiden Teile mit gegensinniger Gewindesteigung über einen zylindrischen Schaft der Spannschraube miteinander verbunden sind, der in einer entsprechend geformten Aufnahmebohrung der Spannelemente geführt ist. Damit wird ein weitgehend biegemomentfreies Drehen der Spannschraube ermöglicht.

Die Spannschraube und die Spannelemente selbst ruhen in einem im Werkzeuggrundhalter gelegenen Führungsdurchbruch, der an der dem Werkzeugköpf zugewandten Seite senkrecht zur Längsmittelachse des Aufnahmezapfens liegende Gleit-Stützflächen für die Spannelemente aufweist.

Nach einer anderen Ausgestaltung der Erfindung ist es jedoch auch möglich, die Spannelemente sowie die dementsprechend gestalteten Führungsdurchbrüche in Querschnitt senkrecht zu ihrer Längsmittelachse oval oder kreisförmig auszubilden. Diese Ausbildung ermöglicht eine Querschnittsverkleinerung der Führungsdurchbrüche bzw. der Spannelemente. Zudem lassen sich im Querschnitt ovale oder kreisförmige Bohrungen und Spannelemente leichter fertigen.

Bei zylindrischem Aufnahmezapfen läßt sich in einfacher Weise mit minimierten Reibungsverlusten dar Werkzeugkopf auf den Aufnahmezapfen spannen, wenn eine Schubstange automatisch oder manuell in Richtung des Werkzeugkopfes bewegt wird, bis ihre keilförmig zueinanderstehenden Spannflächen mit den parallel verlaufenden korrespondierenden Gleitflächen der Spannelemente zur Anlage kommen und bei weiterer Bewegung in gleicher Richtung die Spannelemente radial auseinandergedrückt werden, bis die Spannasen in der ringförmigen Nut des Werkzeugkopfes anliegen. Als ideales Maß für die Gleitflächen und die Spannflächen, in dem sie zur Längsmittelachse geneigt sind, hat sich ein Winkel zwischen 15 und 45°, vorzugsweise zwischen 20 bis 30°, erwiesen. Bei dieser Bemessung sind weder der Weg, den die Schubstange zum Spannen zurücklegen muß, zu lang, noch die Reibungskräfte zwischen den Spannflächen der Schubstange und den Gleitflächen der Spannelemente zu groß.

Nach einer Weiterbildung der Erfindung kann ein Herausfallen der Spannelemente bei freigelegtem Aufnahmezapfen dadurch verhindert werden, daß die Spannelemente Sicherungsstifte besitzen, die bei zurückgeschobener Schubstange und Abnehmen des Werkzeugkopfes vom Werkzeuggrundhalter und damit verbundenem Aufeinanderzubewegen der Spannelemente über einen Teil ihrer Länge in Ausnehmungen des Aufnahmezapfens fallen.

Vorzugsweise wird diese Bewegung der Sicherungsstifte durch Federkraft unterstützt.

Ein automatisches Zurückschieben der Sicherungsstifte entgegen der Federkraft kann dadurch erreicht werden, daß jede der genannten Ausnehmungen eine schrägwinklig zur Längsmittelachse verlaufende Bodenfläche mit zur Längsmittelachse hin zunehmender Tiefe besitzt. Wird bei zurückgezogener Schubstange der Werkzeugkopf von Aufnahmezapfen abgezogen, so werden die Spannelemente über deren Gleitflächen aufeinanderzubewegt, bis die Sicherungsstifte voll an der tiefsten Stelle der Ausnehmungen einrasten; die Spannelemente sind fixiert. Bie vorgenannten Ausführungen lassen sich vorzugsweise auch mit drei Spannelementen realisieren.

Nach einer Weiterbildung der Erfindung können bei zwei Spannelementen diese nicht nur gegensinnig bewegt werden, sondern stehen und bewegen sich in einem bestimmten Winkel zueinander. Nach einer weiteren Ausgestaltung ist es auch möglich, die gegensinnig bewegbaren Spannelemente aus der Achsmitte versetzt, d.h. asymmetrisch, anzuordnen. Mit diesen Varianten wird erreicht, daß das Passungsspiel bei zylindrischer Aufnahmebohrung "einseitig verschoben" wird, wodurch ein "Setzen" des Werkzeugkopfes über das Passungsspiel vermieden wird. Werden z.B. die Spannelemente winklig, d.h. in einem Winkel ≤180° zueinander gelegt, wird bei Bewegung der Spannelemente eine radiale Kraftkomponente erzeugt, die den Werkzeugkopf auf der Mantelfläche des Aufnahmezapfens aufliegen läßt. Gleiches läßt sich durch Verschiebung der gegensinnig arbeitenden Spannzapfen aus der Achsmitte heraus erreichen, wobei abhängig vom Toleranzspiel des Werkzeuges die Eliminierung des Spiels bereits durch kleine Winkelmaße bzw. geringfügige Achsverschiebung erzielt werden kann. In der Regel wird man jedoch zur besseren Führung des Werkzeuges eine höhere radiale Kraft aufbringen wollen, so daß vorzugsweise der Winkel zwischen den Längsachsen der Spannelemente zwischen 140 und 170° liegen soll bzw. die Verschiebung aus der Achsmitte mehr als die Hälfte der Breite des Spannelements betragen soll. Unter der Breite des Spannelements ist dessen Ausdehnung senkrecht zur Längsmittelachse des Spannelements zu verstehen.

Weiterhin wird die Werkzeugeinrichtung bevorzugt mit einem zu einem einstückigen Teil kombinierten Mitnehmer-/Spannelement ausgestattet, was im einfachsten Fall dadurch bewerkstelligt wird, daß die Spannelemente einen Mitnehmerzapfen aufweisen, der in einer entsprechend geformten Nut im Werkzeuggrundhalter eingreift.

Insgesamt ergibt sich so bei der vorliegenden Erfindung eine nahezu momentenfreie Gleitführung innerhalb des Werkzeughalters, die aufgrund deren besonderer Merkmale ein Verkippen der Spannelemente im Aufnahmezapfen oder ein Verkanten des Werkzeugkopfes auf dem Aufnahmezapfen bzw. ein plastisches Verformen verhindert.

Ausführungsbeispiele der Erfindung sind in den Zeichnungen dargestellt. Es zeigen:

Fig. 1a bis c einen Werkzeuggrundhalter mit aufgesetztem Werkzeugkopf in zwei Querschnittsansichten und einer Draufsicht,

Fig. 2 eine Querschnittsansicht eines Werkzeughalters mit aufgesetztem Werkzeugkopf in einer anderen Ausführung des Aufnahmezapfens,

Fig. 3 eine Querschnittsansicht eines Werkzeughalters mit zylindrischem Aufnahmezapfen und aufgesetztem Werkzeugkopf,

Fig. 4a bis f verschiedene Gestaltungen für die Durchbrüche zur Aufnahme der Spannelemente mit Mitnehmerzapfen im Querschnitt,

Fig. 5 eine Querschnittsansicht eines Werkzeughalters mit zylindrischem Aufnahmezapfen, bei dem die Spannelemente durch eine Schubstange betätigbar sind,

Fig. 5a eine Schnittansicht längs der Linie V—V in Fig. 5,

Fig. 6a, b Seitensichten des Aufnahmezapfens mit ovalem bzw. rundem Führungsdurchbruch für die Spannelemente,

Fig. 7 schematische Darstellung der Kraftübertragung von der Schubstange über die Spannelemente auf die Abschrägungen der Nut,

Fig. 8a, b Querschnittsansichten senkrecht zur Längsmittelachse des Aufnahmezapfens und

Fig. 8c, d jeweilige Ansichten zugehöriger Längsschnitte durch den Aufnahmezapfen,

Fig. 9 Querschnittsansicht des Aufnahme zapfens mit zwei Spannelementen, die winklig zueinander angeordnet sind und

Fig. 10 dieselbe Querschnittsansicht mit zwei Spannelementen, die versetzt zur Achsmitte angeordnet sind.

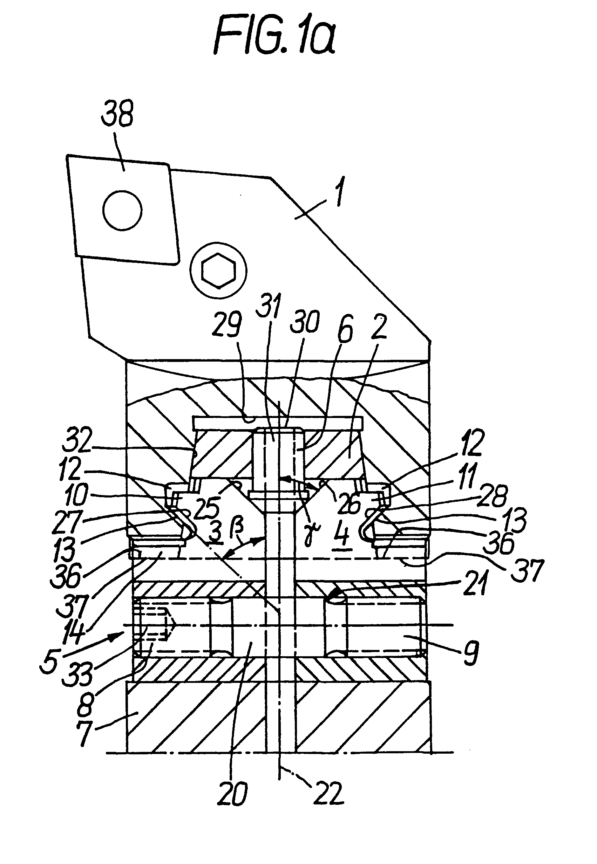

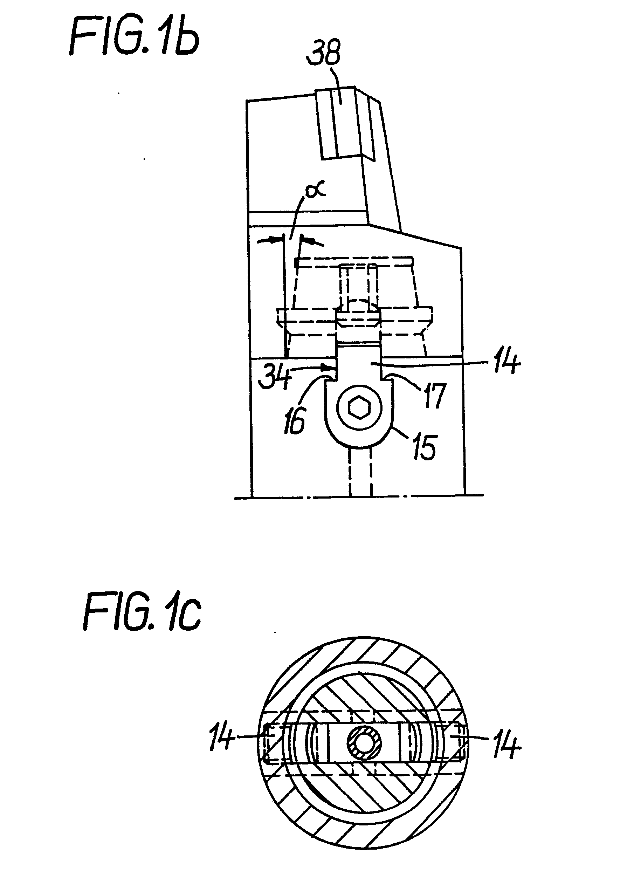

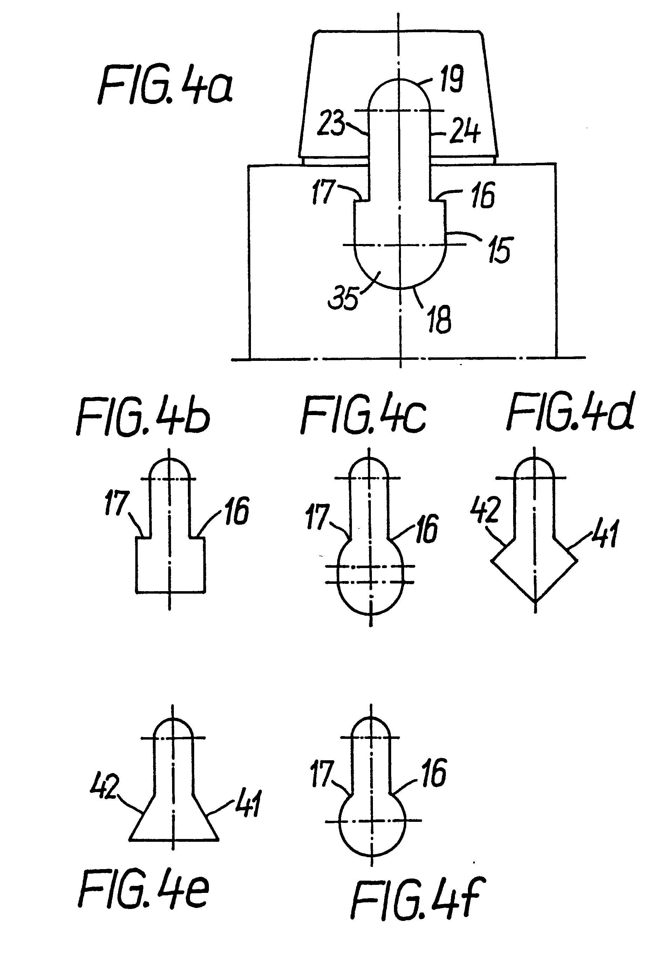

Der in Fig. 1 dargestellte Werkzeugkopf 1 besitzt eine Aufnahmebohrung mit konisch geformter Mantefläche, in die eine Nut 12 eingedreht ist, die in einer Abschrägung, nämlich schrägverlaufenden Gleitfläche 13, ausläuft. Die kegelstumpfförmige Bohrung des Werkzeugkopfes ist auf einen entsprechend kegelstumpfförmig ausgebildeten Aufnahmezapfen 2 aufgesetzt, so daß die den Aufnahmezapfen 2 des Werkzeuggrundhalters 7 und die die Aufnahmebohrung des Werkzeugkopfes 1 umgebenden, senkrecht zur Schaftachse verlaufenden planaren Stirnflächen 37 bzw. 36 spielfrei aneinanderliegen. In Ausnehmungen 15 des Werkzeuggrundhalters 7 mit seitlichen Führungen 23 und 24 sowie absatzförmig ausgebildeten Gleit-Stützflächen 16, 17, die ein Verschieben des Spannelementes in Richtung der Längsmittelachse 22 des Werkzeuggrundhalters verhindern, sind Spannelemente 3, 4 mit einer mit ihr in Eingriff stehenden Spannschraube 5 angeordnet. Die Spannelemente 3, 4, weisen an ihrer der Längsmittelachse 22 des Werkzeuggrundhalters 7 abgekehrten Seite Nasen 10, 11 auf, die zu der der Wendeschneidplatte 38 an der Spitze des Werkzeugkopfes abgewandten Seite in Richtung auf die Längsmittelachse 22 zulaufende, abgeschrägte Flächen 27, 28 besitzen. Wie bereits erwähnt, dienen die abgeschrägten Flächen 27, 28 im Zusammenwirken mit den entsprechenden Abschrägungen 13 der Nut 12 als Gleitebenen beim Spannen des Werkzeugkopfes. Die Spannelemente 3 und 4 besitzen zudem einen bzw. zwei Mitnehmer 14, der bzw. die in entsprechende Nuten 34 des Werkzeugkopfes eingreifen. Hierdurch wird das durch die Zerspanung auftretende Drehmoment ebenso aufgenommen, wie durch die Stützflächen 16, 17, 18 und 19 der Ausnehmung 15 (Fig. 4).

Die Spannelemente stehen mit dem Doppelgewinde der Spannschraube 5 in Eingriff, wobei die Gewindeteile 8, 9 eine gegensinnige Gewindesteigung (Rechts-Links-Gewinde) aufweisen. Zwischen diesen Gewindeteilen 8, 9 besitzt die Spannschraube 5 einen zylindrischen Schaft 20, der in entsprechend großen Aufnahmebohrungen der Spannelemente 3, 4 drehbar gelagert ist. Die Spannschraube 5 kann, z.B. mittels eines Spannschlüssels oder auch durch automatisches Einkuppeln eines Spannantriebs über die Indexbohrung 33 gedreht werden.

Ferner besitzt die Werkzeugeinrichtung ein Abstoßelement 6, das im wesentlichen eine zylindrische Form mit einer aus der Stirnseite des Aufnahmezapfens heraustretenden Stirnfläche 30 besitzt. Die der Stirnfläche 30 gegenüberliegende Grundfläche des Abstoßelements 6 ruht in Gleitflächen 25 und 26, die von schräg zur Längsmittelachse 22 des Aufnahmezapfens verlaufenden Flächen der Spannelemente 3, 4 gebildet werden. Diese Flächen bilden einen Winkel mit der Längsmittelachse von ca. 45°, wobei die Schenkel sich zur Werkzeugkopfspitze hin erweitern. Zudem besitzt das Abstoßelement 6 auch noch eine zentrale Bohrung 31 zur Aufnahme eines Kühlmittels.

Die in Fig. 1 dargestellte Werkzeugeinrichtung wird folgendermaßen betätigt. Bei Drehung der Spannschraube 5 werden unter Eingriff der Gewindeteile 8, 9 die Spannelemente 3, 4, gegensinnig bewegt, d.h. zum Spannen in eine von der Längsmittelachse 22 führende Richtung und zum Lösen in Richtung der Längsmittelachse 22. Beim Spannen schieben sich die Nasen 10, 11 der Spannelemente 3, 4 in eine entsprechende Nut 12 in der Aufnahmebohrung des Werkzeugkopfes, wobei sich die Gleitflächen 27, 28 der Nasen 10, 11 über die Abschrägungen 13 der Nut 12 schieben.

Dies führt dazu, daß die Stirnfläche 36 des Werkzeugkopfes auf die Stirnfläche 37 des Werkzeuggrundhalters gepreßt wird. Der Werkzeugkopf ist gespannt. Beim Lösen des Werkzeugkopfes wird die Spannschraube 5 entgegengesetzt gedreht, wodurch die Spannelemente 3, 4 sich in Richtung zur Längsmittelachse 2 bewegen. Durch die Keilform des Aufnahmezapfens, auch wenn der Keilwinkel α zwischen der Längsmittelachsenrichtung und der Mantelfläche 32 des Aufnahmezapfens 2 unterhalb von 10° liegt, kann es dazu kommen, daß der Werkzeugkopf 1 sich nur schwer von dem Aufnahmezapfen 2 löst. Ein leichtes Ablösen ermöglicht das Abstoßelement 6, das über die Gleitflächen 25 und 26 bei Aufeinanderzubewegen der Abstoßelemente 3 und 4 durch diese Spannelemente 3, 4 weggedrückt wird, so daß die Stirnfläche 30 des Abstoßelementes gegen die Grundfläche 29 der Aufnahmebohrung gedrückt wird und diese mitsamt dem Werkzeugkopf 1 vom Aufnahmezapfen 2 wegschiebt.

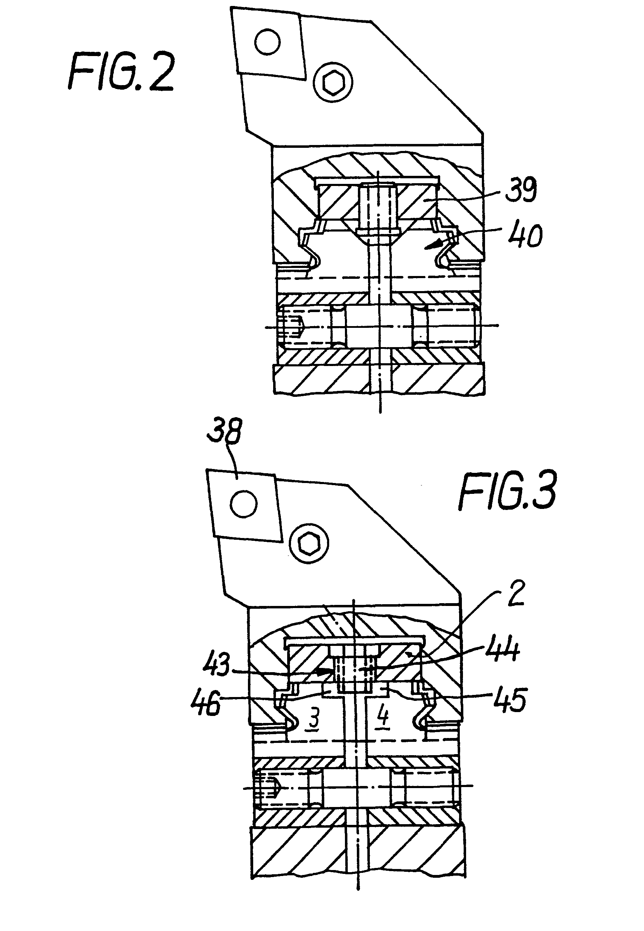

Die Ausführungsform nach Fig. 2 unterscheidet sich von der in Fig. 1 dargestellten durch einen andersgeformten Aufnahmezapfen und eine dementsprechend angepaßte Aufnahmebohrung im Werkzeugkopf 1. Während der in Fig. 1 dargestellte Aufnahmezapfen kegelstumpfförmig ausgebildet ist, setzt sich die Form des Aufnahmezapfens 2 aus einem zylindrischen Teil 39 und einem kegelstumpfförmigen Teil 40 zusammen. Dadurch, daß die Aufnahmebohrung entsprechend geformt ist, ergibt sich beim Aufsetzen des Werkzeugkopfes eine ideale Führung, die insbesondere beim automatischen Werkzeugwechsel benutzt werden kann.

Fig. 3 zeigt einen Werkzeuggrundhalter mit einem zylindrischen Aufnahmezapfen 2, der über Spannelemente 3, 4 einen Werkzeugkopf 1 mit einer entsprechend geformten zylindrischen Aufnahmebohrung spannt. Da sich bei zylindrischen Aufnahmezapfen im Gegensatz zu kegelstumpfförmigen Aufnahmezapfen nicht das Problem des Festklemmens des Werkzeugkopfes auf dem Aufnahmezapfen stellt, ist auch kein Abstoßelement erforderlich. Demzufolge ist lediglich ein Sicherungselement 43 vorgesehen, das eine Bohrung 44 für den Kühlmittelzufluß zur Schneide der Wendeschneidplatte 38 aufweist. Die Spannelemente 3 und 4 weisen an ihrer der Wendeschneidplatte 38 zugewandten Seite eine Ausnehmung 45, auf, die in ihrer Form dem unteren Teil des Sicherungselementes 43 angepaßt sind und ein ungestörtes Bewegen der Spannelemente 3, 4 ohne Behinderung durch das genannte Sicherungselement 43 ermöglichen.

Fig. 4 zeigt verschiedene Gestaltungen für die Führungsdurchbrüche, die Ausnehmungen 15, für die Spannelemente. Die wesentlichen Merkmale seien anhand der Fig. 4a erläutert. Der Führungsdurchbruch weist in der Regel absatzförmige Gleitflächen 16 und 17 auf, die ein Verschieben der Spannelemente in Richtung der Werkzeugkopfspitze verhindern. Zur Minimierung der Drehmomente sind seitliche Führungsflächen 23 und 24 und Abstützflächen 18 (im unteren Teil des Führungsdurchbruches) und 19 (im oberen Teil des Führungsdurchbruches) vorgesehen. Die Spannschraube 5 ist in der Ausnehmung 35 als Teil der Ausnehmung 15 positioniert. Eine ähnliche Gestaltung haben die Führungsdurchbrüche gemäß Figuren 4b, c und f, nämlich eine länglich runde Form mit Abstützflächen 16, 17 in ausgeprägter Form (Fig. 4b) oder entsprechend angedeutet (Fig. 4c, f). Der die Spannschraube aufnehmende Teil des Führungsdurchbruches kann entsprechend den Figuren 4d und e auch im unteren Teil im wesentlichen drei- oder viereckig sein, wobei die Funktion der absatzförmigen Flächen 16 und 17 von den Seitenflächen 41 und 42, die ein Verschieben des Spannelements in Richtung der Werkzeugkopfspitze verhindern, übernommen wird.

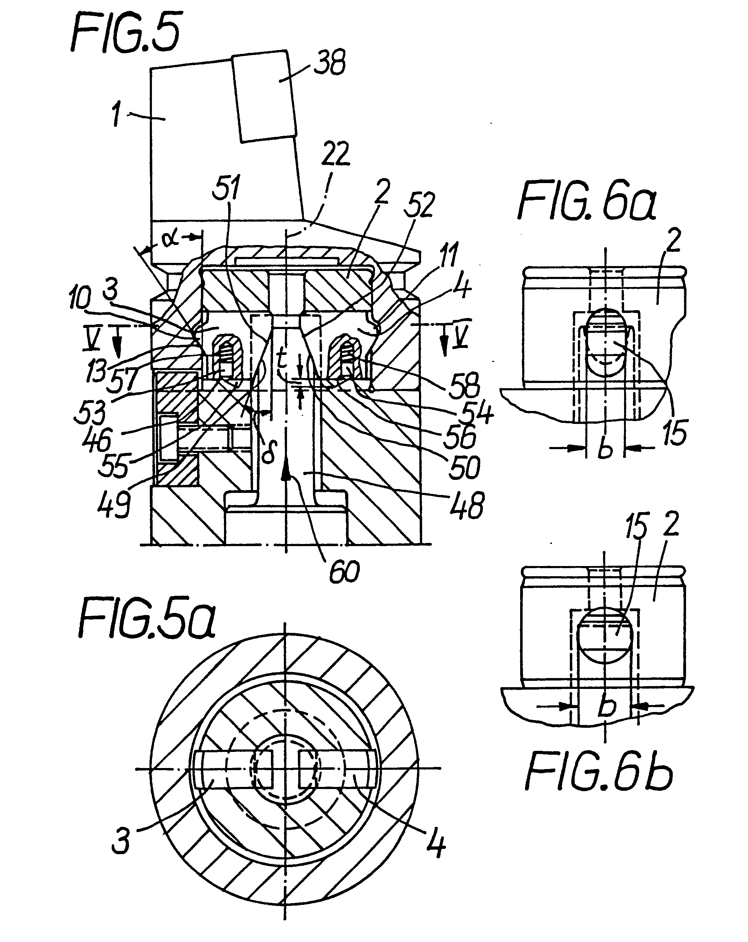

Der in Fig. 5 dargestellte Werkzeugkopf weist ebenso eine zylindrische Aufnahmebohrung auf, in die ein zylindrischer Aufnahmezapfen 2 einführbar ist. Als Spannvorrichtung dient eine Schubstange 48, die an dem den Spannelementen 3 und 4 zugewandten Ende eine durch Fräsen eines Zylinders gefertigte keilförmige Mantelfläche aufweist, so daß die Spannflächen 49 und 50 der Schubstange 48 an in entsprechendem Winkel angeordneten Gleitflächen 51 und 52 der Spannelemente 3 und 4 zur Anlage kommen. Die Gleitflächen 51, 52 sowie der Spannflächen 49 und 50 stehen zur Längsmittelachse 22 in einem Winkel δ zwischen 15 und 45°, im vorliegenden Fall von 20°. Bei der Wahl des entsprechenden Winkels δ wird jeweils zu berücksichtigen sein, daß ein kleinerer Winkel große Wege der Schubstange erfordert, um die Spannelemente 3 und 4 in Verriegelungsposition zu bringen. Im Unterschied zu der in Fig. 1 bis 3 dargestellten Anordnung weisen die Spannelemente zudem Sicherungsstifte 53 und 54 auf, die unter dem Druck von Federn 57 und 58 stehen. Konstruktiv sind die Sicherungsstifte so angeordnet, daß sie in Bohrungen liegen, die an der dem Werkzeugkopf abgewandten Seite des bzw. der Spannelemente vorgesehen sind. Im Bohrungsgrund sind die Federn 57 bzw. 58 befestigt; an den Federn 57, 58 hängen die Sicherungsstifte 53 und 54. Während die Sicherungsstifte bei gespanntem Werkzeugkopf, d.h. bei weitestmöglich auseinandergefahrenen Spannelementen, gegen eine der Bohrung unmittelbar gegenüberliegende Stirnwand 46 des Aufnahmezapfens stoßen, können die Sicherungsstifte 53 und 54 beim Lösen des Werkzeugkopfes, mit dem ein Aufeinanderzubewegen der Spannelemente 3 und 4 verbunden ist, unter Unterstützung des Druckes der Federn 57 und 58 über einen Teil ihrer Länge in Ausnehmungen 55 und 56 fallen und durch dieses Einrasten eine Fixierung der Spannelemente 3 und 4 bewirken. Die Ausnehmungen 55 und 56 sind der Gestalt, daß deren Bodenfläche schrägwinklig mit zur Längsmittelachse hin zunehmender Tiefe t verläuft. Dadurch wird gewährleistet, daß die Sicherungsstifte beim nächsten Spannen des Werkzeuges ohne weitere Fremdeinwirkung als die der Schubstange 48 bei Auseinanderbewegen der Spannelemente 3 und 4 aus den Ausnehmungen 55 und 56 entgegen dem Federdruck herausgeschoben werden können.

Die in Fig. 5 und 5a dargestellte Werkzeugein-richtung arbeitet folgendermaßen. Durch Bewe-gung der Schubstange 48 in Richtung des Pfeils 60 kommen die Spannflächen 49 und 50 der Schubstange 48 an den Gleitflächen 51 und 52 der Spannelemente 3 und 4 zur Anlage. Ein weiteres Schieben in angezeigter Pfeilrichtung bewirkt, daß die Nasen 10 bzw. 11 der Spannelemente in der entsprechend geformten Nut 12 in der Aufnahmebohrung des Werkzeugkopfes 1 schließlich zur Anlage kommen. Die Abschrägung 13 der Nut bildet ebenso wie der korrespondierende Winkel der Keile der Spannelemente mit der Richtung der Längsmittelachse einen Winkel zwischen 30 und 60°, im vorliegenden Fall von ca. 30°. Der Werkzeugkopf ist gespannt.

Bei Zurücknahme der Schubstange 60 löst sich die blockierte Verriegelung der Spannelemente 3 und 4 wider auf, so daß die Spannelemente 3 und 4 beim Abziehen des Werkzeugkopfes 1 bedingt durch die Wirkung der Gleitflächen 27 und 28 an der Abschrägung 13 der Nut 12 aufeinanderzugeschoben werden. Gleichzeitig werden unter dem Druck der Federn 57 und 58 die Sicherungsstifte 53 und 54 über einen Teil ihrer Länge in Ausnehmungen 55 und 56 gedrückt, bis sie an deren Stelle mit der maximalen Tiefe t zur Ruhe kommen.

In Fig. 6a und 6b sind ovale (länglich-runde) bzw. kreisförmige Ausnehmungen 15 für die Spannelemente dargestellt. Wählt man die durchzuführenden Spannelemente 3 und 4 im Querschnitt ebenfalls oval bzw. kreisförmig, kann wegen des kleineren aufzubohrenden Raums der Werkzeuggrundhalter im Bereich des Aufnahmezapfens 2 erheblich stabiler ausgelegt werden. Zudem sind ovale bzw. runde Durchbrüche erheblich leichter zu fertigen. Die Durchbrüche 15 bzw.

die entsprechend angepaßten Spannelemente haben eine Breite b.

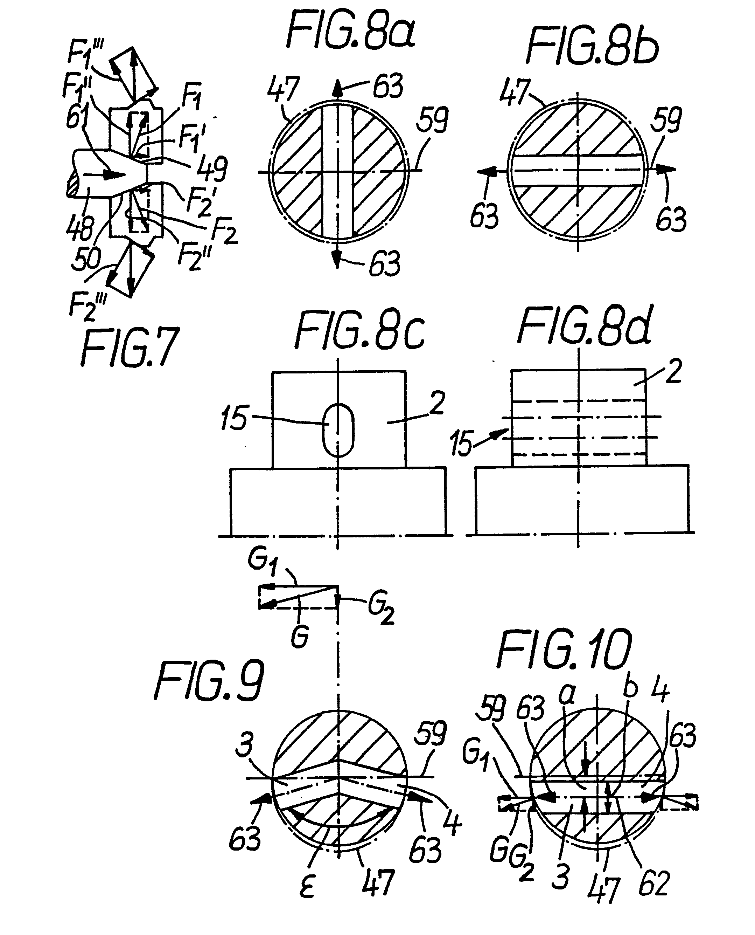

Wie sich die über die Schubstange 48 eingebrachten Kräfte verteilen, zeigt Fig. 7. Bewegt man die Schubstange in Richtung des Pfeils 61, so teilt sich die über deren Spannflächen 49 und 50 ausgeübte Kraft $F_1$ bzw. $F_2$ nach dem Kräfte-parallelogramm in eine in Bewegungsrichtung wirkende Kraftkomponente $F_1'$ bzw. $F_2'$ sowie eine senkrecht zur Bewegungsrichtung wirkende Kraftkomponente $F_1''$ bzw. $F_2''$ auf. Diese Kraft $F_1''$ bzw. $F_2''$ wirkt über die Gleitfläche 27 bzw. 28 der Spannnase 10 bzw. 11 auf die Abschrägung 13 der Nut 12, so daß sich eine Kraft $F_1'''$ bzw. $F_2'''$ zwischen den genannten Flächen ergibt. Diese Kraft $F_1'''$ bzw. $F_2'''$ wirkt auch in Gegen-richtung des Pfeils 48, so daß der Werkzeugkopf gegen die Stirnfläche 37 des Werkzeuggrundhalters gepreßt wird.

Fig. 8a und 8b zeigen Querschnittsansichten von Spannelementanordnungen senkrecht (Fig. 8a) und parallel (Fig. 8b) zu einer gedachten Mittelachse 59, die senkrecht zur Längsmittelachse 22 verläuft. Die umfangsseitig gezeichneten strichpunktierten Linien 47 verdeutlichen das Spiel (die Toleranz), das (die) der Aufnahmezapfen 2 in der entsprechenden Aufnahmebohrung des Werkzeugkopfes hat. In Fig. 8c und 8d sind die korrespondierenden Führungsdurchbrüche bzw. Ausnehmungen 15 für die Spannelemente im Aufnahmezapfen 2 zu erkennen.

Fig. 9 zeigt eine winklige Anordnung der Spannelemente 3 und 4 zueinander. Der durch sie gebildete Winkel ε beträgt 160°. Zudem ist in Fig. 9 dargestellt, wie die durch Bewegung der Spannelemente auf die Abschrägung 13 der Spannase 12 ausgeübte Kraft G sich in eine parallel zu der gedachten Mittelachse 59 wirkende Kraft-komponente $G_1$ und eine hierzu senkrecht wir-kende Kraftkomponente $G_2$ aufteilt.

Eine solche Aufteilung der Kraftkomponenten kann auch dadurch erzielt werden, daß die Spannelemente nicht achsmittig, sondern parallel zu einer gedachten Querschnittsachse 59 angeordnet werden. Auch hier kommt es zu einer Aufteilung der Kraft in Komponenten $G_1$ und $G_2$, wie oben beschrieben (Fig. 10).

Mit einer solchen asymmetrischen bzw. nicht achsmittigen Anordnung von zwei Spannelementen wird erreicht, daß das bei zylindrischen Passungen übliche Passungsspiel einseitig durch Wirkung der radialen Kraftkomponente $G_2$ verschoben wird. Dies hat zur Folge, daß ein "Setzen" des Werkzeugkopfes über das Passungsspiel vermieden werden soll. Bei der Bemessung des Winkels ε bzw. des Abstandes a, den die gemeinsame Längsachse 62 der Spannelemente 3 und 4 von der gedachten Mittelachse 59 hat, ist zu berücksichtigen, daß bereits kleine Winkelabweichungen von 180° eine Eliminierung des Toleranzspiels bewirken. Um das Auskippen des Werkzeugkopfes sicher zu vermeiden, wird man jedoch bemüht sein, eine höhere radiale Kraft $G_2$ aufzubringen, so daß vorzugsweise der Winkel ε kleiner gewählt werden sollte. Dies bedeutet für das Verschiebungsmaß aus der Achsmitte, daß dieses um mehr als die Hälfte der Breite b des Spannelements gewählt wird. Auch die letztgenannte Maßnahme bewirkt eine als ideal angestrebte Flächenpressung, die ein Verkanten oder Verformen des Werkzeuges verhindert.

Die in den Fig. 8a, 8b, 9 und 10 dargestellten Pfeile 63 geben die Bewegungsrichtung der Spannelemente beim Spannen des Werkzeugkopfes 1 an.

**Patentansprüche**

1. Werkzeugeinrichtung mit einem Werkzeuggrundhalter (7) und einem Werkzeugkopf (1), bei der ein Aufnahmezapfen (2) in einer entsprechend geformten Aufnahmebohrung gelagert ist, wobei der Werkzeugkopf (1) und der Werkzeuggrundhalter (7) mittels von außen über eine axial in dem Werkzeuggrundhalter (7) verschiebbar gelagerte Spannvorrichtung radial betätigbare Spannmittel (3, 4) die in eine entsprechend ausgebildete mit einer spitzwinklig zur Längsmittelachse (22) verlaufenden Fläche (13) ausgestatteten Ausnehmung (12) des Werkzeugkopfes (1) eingreifen, arretierbar sind, wobei an dieser Fläche (13) der Ausnehmung (12) im Spannzustand entsprechend ausgebildete Flächen (27, 28) der Spannmittel (3, 4) und die den Aufnahmezapfen (2) und die die Aufnahmebohrung umgebenden Stirnflächen (36, 37) spielfrei aneinanderliegen, dadurch gekennzeichnet, daß der Werkzeuggrundhalter (7) den Aufnahmezapfen (2) und der Werkzeugkopf (1) die Aufnahmebohrung aufweisen, daß die Stirnflächen (36, 37) planar ausgebildet sind, daß als Spannmittel zwei oder mehr Spannelemente (3, 4) mit Spannasen (10, 11) vorgesehen sind, daß die Ausnehmung eine Nut (12) mit als Gleitfläche ausgestalteter, spitzwinklig zur Längsmittelachse (22) des Aufnahmezapfens (2) verlaufender Fläche ist, auf der entsprechend ausgebildete Gleitflächen (27, 28) der Spannasen (10, 11) beim Spannen gleitend führbar sind, und daß als Spannvorrichtung eine Spannschraube (5) mit Rechts-Links-Gewinde (8, 9) vorgesehen ist, worüber zwei Spannelemente (3, 4) im Aufnahmezapfen (2) gegenläufig und senkrecht zu dessen Längsmittelachse (22) führbar sind, wobei die Spannelemente an ihrer dem Werkzeugkopf (1) zugewandten Seite konisch auseinanderlaufende Gleitflächen (25, 26) aufweisen, die einem konzentrisch zur Längsmittelachse (22) des Aufnahmezapfens (2) angeordneten, gleitend im Aufnahmezapfen (2) geführten, vorzugsweise zylindrischen Abstoßelement (6) als Abstützflächen dienen, oder daß als Spannvorrichtung eine Schubstange (48) vorgesehen ist, deren keilförmig angeordnete Spannflächen (49, 50) an schräg zu der mit dem Aufnahmezapfen (2) gemeinsamen Längsmittelachse (22) liegenden Gleitflächen (51, 52) der Spannelemente (3, 4) abstützbar sind und daß eine Bewegung der Schubstange in Richtung des Werkzeugkopfes (1) ein radiales Auseinanderdrücken der Spannelemente bewirkt.

2. Werkzeugeinrichtung nach Anspruch 1, gekennzeichnet durch einen zumindest über einen Teil der seitlichen Mantelfläche konisch ausgebildeten Aufnahmezapfen (2).

3. Werkzeugeinrichtung nach Ansprüchen 1 und 2, dadurch gekennzeichnet, daß der vom Mantel des konisch ausgebildeten Aufnahmezapfens (2) mit dessen Längsmittelachse (22) gebildete Keilwinkel (α) 1° bis 10°, vorzugsweise 1,5° bis 4° beträgt.

4. Werkzeugeinrichtung nach einem der Ansprüche 1 bis 3, dadurch gekennzeichnet, daß die Gleitfläche (13) der Nut (12) bzw. die anliegende Fläche (27, 28) der Spannasen (10, 11) in einem Winkel (β) von 30° bis 80°, vorzugsweise 30° bis 60°, im Hinblick auf die Längsmittelachse (22) verlaufen.

5. Werkzeugeinrichtung nach einem der Ansprüche 1 bis 4, dadurch gekennzeichnet, daß die den Gleitflächen (25, 26) abgewandte Seite des Abstoßelements (6) als Stirnfläche (30) an der ebenen Grundfläche (29) der Aufnahmebohrung im Werkzeugkopf (1) anliegt.

6. Werkzeugeinrichtung nach Anspruch 1 oder 5, dadurch gekennzeichnet, daß die Gleitflächen (25, 26) zu der Längsmittelachse (22) in einem Winkel (δ) von 45° bis 80° stehen.

7. Werkzeugeinrichtung nach einem der Ansprüche 1, 5 oder 6, dadurch gekennzeichnet, daß das Abstoßelement (6) eine zentrale Bohrung (31) zum Kühlmitteldurchfluß aufweist.

8. Werkzeugeinrichtung nach einem der Ansprüche 1 bis 7, dadurch gekennzeichnet, daß die Spannschraube (5) zwischen den Gewindeteilen des Rechts-Links-Gewindes (8, 9) mit einem zylindrischen Schaft (20) versehen ist, der in einer entsprechend geformten Aufnahmebohrung (21) ruht.

9. Werkzeugeinrichtung nach einem der Ansprüche 1 bis 8, dadurch gekennzeichnet, daß der im Werkzeuggrundhalter (7) gelegene Führungsdurchbruch (35) für die Spannschraube (5) und die Spannelemente (3, 4) an der dem Werkzeugkopf (1) zugewandten Seite senkrecht zu Längsmittelachse (22) liegende Gleit-Stützflächen (16, 17) aufweist.

10. Werkzeug nach einem der Ansprüche 1 bis 9, dadurch gekennzeichnet, daß die Spannelemente (3, 4) sowie die sie aufnehmenden, dementsprechend gestalteten Führungsdurchbrüche (15) im Querschnitt senkrecht zu ihrer Längsmittelachse (22) oval oder kreisförmig ausgebildet sind.

11. Werkzeugeinrichtung nach Anspruch 1, dadurch gekennzeichnet, daß die Gleitflächen (51, 52) sowie die Spannflächen in einem Winkel (δ) zwischen 15° und 45°, vorzugsweise 20° bis 30°, zur Längsmittelachse stehen.

12. Werkzeugeinrichtung nach Ansprüchen 1 oder 11, dadurch gekennzeichnet, daß die Spannelemente (3, 4) Sicherungsstifte (53, 54) besitzen, die bei zurückgeschobener Schubstange und Lösen des Werkzeuggrundhalters (7) vom Werkzeugkopf (1) und damit verbundenem Aufeinanderzubewegen der Spannelemente (3, 4) über einen Teil ihrer Länge in Ausnehmungen (55, 56) fallen und damit ein Herausfallen der Spannelemente (3, 4) aus dem Aufnahmezapfen (2) des Werkzeuggrundhalters (7) verhindern.

13. Werkzeugeinrichtung nach Anspruch 12, dadurch gekennzeichnet, daß die Sicherungsstifte bei eingespanntem Werkzeugkopf (1) unter dem Druck von Federn (57, 58) stehen.

14. Werkzeugeinrichtung nach Anspruch 12, dadurch gekennzeichnet, daß jede der Ausnehmungen (55, 56) eine schrägwinklig zur Längsmittelachse (22) verlaufende Bodenfläche mit zur Längsmittelachse (22) hin zunehmender Tiefe (t) besitzt.

15. Werkzeugeinrichtung nach einem der Ansprüche 1, 4 und 8 bis 14, dadurch gekennzeichnet, daß die Spannelemente (3, 4) asymmetrisch zu einer senkrecht zur Längsmittelachse (22) stehenden Querschnittsachse (59) angeordnet sind.

16. Werkzeugeinrichtung nach Anspruch 15, dadurch gekennzeichnet, daß die Spannelemente parallel zur Querschnittsachse (59) verschoben sind, vorzugsweise um mehr als die Hälfte der Breite (b) des Spannelementes.

17. Werkzeugeinrichtung nach einem der Ansprüche 1, 4 und 8 bis 14, dadurch gekennzeichnet, daß die Längsachsen der Spannelemente einen Winkel (ε), vorzugsweise zwischen 170° und 140°, bilden.

18. Werkzeugeinrichtung nach einem der Ansprüche 1 bis 3 und 4 bis 14, dadurch gekennzeichnet, daß drei Spannelemente verwendet werden.

**Revendications**

1. Dispositif d'outillage, comportant un support de la base d'outil (7) et une tête d'outil (1), pour lequel un nez de centrage (2) est placé dans un alésage de positionnement de forme adaptée en conséquence, étant entendu que la tête d'outil (1) et le support de la base d'outil (7) peuvent être immobilisés au moyen d'organes de serrage (3, 4) pouvant être déplacés radialement de l'extérieur par l'intermédiaire d'un dispositif de mise en serrage monté coulissant axialement dans le support de la base d'outil (7), organes de serrage (3, 4) qui viennent s'enclencher dans un évidement (12), de forme adaptée, de la tête d'outil (1), réalisé avec une surface (13) faisant un angle aigu par rapport à l'axe longitudinal médian (22), étant entendu que, sur cette surface (13) de l'évidement (12), des surfaces réalisées en conséquence (27, 28) des organes de serrage (3, 4) et les surfaces frontales (36, 37) entourant le nez de centrage (2) et l'alésage de positionnement viennent s'appuyer sans jeu les unes contre les autres, lorsque le serrage est réalisé, caractérisé en ce que le support de la base d'outil (7) présente le nez de centrage (2) et en ce que la tête d'outil (1) présente l'alésage de positionnement, en ce que les faces de contact (36, 37) sont réalisées planes, en ce que deux organes de serrage (3, 4), ou plus, comportant des nez de serrage (10, 11) sont prévus comme moyens de serrage, en ce que l'évidement est une rainure (12) comportant une surface réalisée sous la forme d'une surface de glissement faisant un angle aigu par rapport à l'axe longitudinal médian (22) du nez de centrage (2), surface sur laquelle des surfaces de glissement (27, 28) des nez de serrage (10, 11) réalisées en conséquence, peuvent être guidés de façon à glisser lors de la mise en serrage, et en ce qu'est prévue, comme dispositif de mise en serrage, une vis de serrage (5) comportant des filetages à droite-à-gauche (8, 9), au moyen de laquelle deux organes de serrage (3, 4) peuvent être guidés dans le nez de centrage (2) en sens contraire et perpendiculairement à l'axe longitudinal médian (22) de ceux-ci, étant entendu que les organes de serrage présentent, sur leur face tournée vers la tête d'outil (1), des surfaces de glissement (25, 26), s'écartant l'une de l'autre en formant un cône, qui servent, en tant que surfaces d'appui, d'organe de repoussement (6), de préférence cylindrique, disposé concentriquement à l'axe longitudinal médian (22) du nez de centrage (2), guidé en coulissement dans le nez de centrage (2), ou en ce que, comme dispositif de mise en serrage, est prévue une tige coulissante (48), dont les surfaces de serrage (49, 50), disposées en tronc de cône, peuvent s'appuyer sur des surfaces de glissement (51, 52) des organes de serrage (3, 4), situées inclinées par rapport à l'axe longitudinal médian (22) commun avec le nez de centrage (2), et en ce qu'un déplacement de la tige coulissante dans la direction de la tête d'outil (1) provoque l'écartement radial des organes de serrage.

2. Dispositif d'outillage suivant la revendication 1, caractérisé par un nez de centrage (2) réalisé conique, au moins sur une partie de sa surface latérale externe.

3. Dispositif d'outillage suivant la revendication 1 et la revendication 2, caractérisé en ce que l'angle (α) du cône formé entre la surface externe du nez de centrage (2) réalisé conique et son axe longitudinal médian (22) a une valeur de 1° à 10°, de préférence 1,5° à 4°.

4. Dispositif d'outillage suivant l'une quelconque des revendications 1 à 3, caractérisé en ce que la surface de glissement (13) de la rainure (12), ou les surfaces en contact (27, 28) des nez de serrage (10, 11), forment, par rapport à l'axe longitudinal médian (22), un angle (β) de 30° à 80°, de préférence de 30° à 60°.

5. Dispositif d'outillage suivant l'une quelconque des revendications 1 à 4, caractérisé en ce que la face de l'organe de repoussement (6), opposée aux surfaces de glissement (25, 26) et constituant la surface frontale (30), est au contact avec la surface de base (29) de l'alésage de positionnement réalisé dans la tête d'outil (1).

6. Dispositif d'outillage suivant la revendication 1 ou la revendication 5, caractérisé en ce que les surfaces de glissement (25, 26) forment un angle (δ) de 45° à 80° avec l'axe longitudinal médian (22).

7. Dispositif d'outillage suivant l'une quelconque des revendications 1, 5 ou 6, caractérisé en ce que l'organe de repoussement (6) présente un alésage central (31) pour lécoulement du fluide de refroidissement.

8. Dispositif d'outillage suivant l'une quelconque des revendications 1 à 7, caractérisé en ce que la vis de serrage (5) est munie d'un fût cylindrique (20) entre les parties filetées du filetage à droite-à gauche (8, 9), fût qui repose dans un alésage de réception (21) de forme adaptée.

9. Dispositif d'outillage suivant l'une quelconque des revendications 1 à 8, caractérisé en ce que le guidage traversant (35) pour la vis de serrage (5) et les organes de serrage (3, 4), situé dans le support de la base d'outil (7), présente, sur sa face tournée vers la tête d'outil (1), des surfaces d'appui et de glissement (16, 17) disposées perpendiculairement à l'axe longitutudinal médian (22).

10. Dispositif d'outillage suivant l'une quelconque des revendications 1 à 9. caractérisé en ce que les organes de serrage (3, 4) ainsi que les guidages traversants (35) les recevant et réalisés en conséquence ont, en section, perpendiculairement à leur axe longitudinal médian (22), une forme ovale ou circulaire.

11. Dispositif d'outillage suivant la revendication 1, caractérisé en ce que les surfaces de glissement (51, 52), ainsi que les surfaces de serrage, se trouvent, par rapport à l'axe longitudinal médian (22), dans un angle compris entre 15° et 45°, de préférence 20° à 30°.

12. Dispositif d'outillage suivant la revendication 1 ou la revendication 11, caractérisé en ce que les organes de serrage (3, 4) présentent des ergots de sécurité (53, 54) qui, lorsqu'on fait glisser en arrière la tige coulissante et qu'on libère le support de la base d'outil (7) de la tête d'outil (1), et qu'on tait déplacer l'un vers l'autre les organes de serrage (3, 4) liés avec lui, tombent, sur une partie de leur longueur, dans des évidements (55, 56) et, ainsi, empêchent que les organes de serrage (3, 4) retombent en dehors du nez de centrage (2) du support de la base d'outil (7).

13. Dispositif d'outillage suivant la revendication 12, caractérisé en ce que, lorsque la tête d'outillage est en serrage, les ergots de sécurité sont soumis à la pression de ressorts (57, 58).

14. Dispositif d'outillage suivant la revendication 12, caractérisé en ce que chacun des évidements (55, 56) présente une surface de fond formant un angle avec l'axe longitudinal médian (22) et comportant une profondeur (t) croissante en allant vers l'axe longitudinal médian (22).

15. Dispositif d'outillage suivant l'une quelconque des revendications 1, 4 et 8 à 14, caractérisé en ce que les organes de serrage (3, 4) sont disposés de façon asymétrique par rapport à un axe transversal (59) situé perpendiculairement à l'axe longitudinal médian (22).

16. Dispositif d'outillage suivant la revendication 15, caractérisé en ce que les organes de serrage sont décalés parallèlement à l'axe transversal (59), de préférence de plus de la moitié de la largeur (b) de l'organe de serrage.

17. Dispositif d'outillage suivant l'une quelconque des revendications 1, 4 et 8 à 14, caractérisé en ce que les axes longitudinaux des organes de serrage forment un angle (ε), compris de préférence entre 170° et 140°.

18. Dispositif d'outillage suivant l'une quelconque des revendications 1 à 3 et 4 à 14, caractérisé en ce que l'on utilise trois organes de serrage.

**Claims**

1. A tool arrangement having a tool base holder (7) and a tool head (1) and in which a receiving pin (2) is mounted in a correspondingly shaped receiving bore, the tool head (1) and the tool base holder (7) being lockable by means of clamping means (3, 4) which can be radially actuated from outside via a clamping device mounted for axial displacement in the tool base holder (7) and engage in a correspondingly shaped recess (12) with which the tool head (1) is formed and which has a face (13) extending at an acute angle to the longitudinal central axis (22), correspondingly shaped faces (27, 28) on the clamping means (3, 4) bearing in the clamping state against said face (13) of the recess (12), and the end faces enclosing the receiving pin (2) and the end faces (36, 37) enclosing the receiving bore bearing against one another without clearance, characterized in that the tool base holder (7) has the receiving pin (2) and the tool head (1) the receiving bore; the end faces (36, 37) are constructed planar; the clamping means provided are two or more clamping elements (3, 4) having clamping lugs (10, 11); the recess is a groove (12) having a face, constructed as a sliding face, which extends at an acute angle to the longitudinal central axis (22) of the receiving pin (2) and on which correspondingly shaped sliding faces (27, 28) of the clamping lugs (10, 11) are slidably guided during clamping; and the clamping device provided is a clamping screw (5) having right-hand and left-hand screwthreadings (8, 9) over which two clamping elements (3, 4) can be guided in the receiving pin (2) to opposite hands and perpendicularly to its longitudinal central axis (22), the clamping elements having on their side adjacent the tool head (1) conically diverging sliding surfaces (25, 26) which act as bearing surfaces for a preferably cylindrical repelling element (6) disposed concentrically of the longitudinal central axis (22) of the receiving pin (2) and slidably guided in the receiving pin (2); or the clamping device provided is a thrust rod (48) whose clamping faces (49, 50), arranged in wedge shape, can be borne on sliding faces (51, 52) of the clamping elements (3, 4) disposed at an inclination to the longitudinal central axis (22) shared with the receiving pin (2), a movement of the thrust rod in the direction of the tool head (1) causing the clamping elements to be forced apart radially.

2. A tool arrangement according to claim 1, characterized by a receiving pin (2) constructed conical over at least a portion of the lateral generated surface.

3. A tool arrangement according to claims 1 and 2, characterized in that the wedge angle (α) formed by the generated surface of the conical receiving pin (2) with its longitudinal central axis (22) is 1° to 10°, preferably 1.5° to 4°.

4. A tool arrangement according to one of claims 1 to 3, characterized in that the sliding face (13) of the groove (12) and the adjoining face (27, 28) of the clamping lugs (10, 11) extend at an angle (β), of 30° to 80°, preferably 30° to 60°, in relation to the longitudinal central axis (22).

5. A tool arrangement according to one of claims 1 to 4, characterized in that the side of the repelling element (6) remote from the sliding faces (25, 26) bears as an end face (30) against the flat bottom face (29) of the receiving bore in the tool head (1).

6. A tool arrangement according to claims 1 or 5, characterized in that the sliding faces (25, 26) are at an angle (δ) of 45° to 80° to the longitudinal central axis (22).

7. A tool arrangement according to one of claims 1, 5 or 6, characterized in that the repelling element (6) is formed with a central bore (31) for the flow of coolant.

8. A tool arrangement according to one of claims 1 to 7, characterized in that the clamping screw (5) is formed between the screwthreaded portions of the right-hand and left-hand screwthreadings (8, 9) with a cylindrical shank (20) which rests in a correspondingly shaped receiving bore (21).

9. A tool arrangement according to one of claims 1 to 8, characterized in that the guide aperture (35) formed in the tool base holder (7) for the clamping screw (5) and the clamping elements (3, 4) has sliding-bearing faces (16, 27) lying perpendicularly to the longitudinal central axis (22) on the side adjacent the tool head (1).

10. A tool arrangement according to one of claims 1 to 9, characterized in that the clamping elements (3, 4) and their correspondingly shaped receiving guide apertures (15) are constructed oval or circular in cross-section perpendicularly to their longitudinal central axis (22).

11. A tool arrangement according to claim 1, characterized in that the sliding faces (51, 52) and also the clamping faces are at an angle (δ) of between 15° and 45°, preferably 20° to 30°, to the longitudinal central axis.

12. A tool arrangement according to claims 1 or 11, characterized in that the clamping elements (3, 4) have securing pins (53, 54) which, when the thrust rod is pushed back and the tool base holder (7) is loosened from the tool head (1) with a consequent movement of the clamping elements (3, 4) towards one another, drop over a portion of their length into recesses (55, 56), thereby preventing the clamping elements (3, 4) from dropping out of the receiving pin (2) of the tool base holder (7).

13. A tool arrangement according to claim 12, characterized in that the securing pins experience the pressure of springs (57, 58) when the tool head (1) is clamped.

14. A tool arrangement according to claim 12, characterized in that each of the recesses (55, 56) has a bottom face which has a depth (t) increasing in the direction of the longitudinal central axis (22) and extends at an inclination to the longitudinal central axis (22).

15. A tool arrangement according to one of claims 1, 4 and 8 to 14, characterized in that the clamping elements (3, 4) are disposed asymmetrically in relation to a cross-sectional axis (59) perpendicular to the longitudinal central axis (22).

16. A tool arrangement according to claim 15, characterized in that the clamping elements are displaced parallel with the cross-sectional axis (59), preferably by more than half the width (b) of the clamping element.

17. A tool arrangement according to one of claims 1, 4 and 8 to 14, characterized in that the longitudinal axes of the clamping elements form an angle (ε), preferably of between 170° and 140°.

18. A tool arrangement according to one of claims 1 to 3 and 4 to 14, characterized in that three clamping elements are used.

# FIG.1a

FIG.1b

38

∝

34

16

17

14

15

FIG.1c

14

14

EP 0 193 020 B1

FIG.2

39

40

38

FIG.3

2

43

44

46

45

3

4

3

FIG.4a

FIG.4b

FIG.4c

FIG.4d

FIG.4e

FIG.4f

FIG.5

FIG.6a

FIG.5a

FIG.6b

# FIG.8a

# FIG.8b

# FIG.7

# FIG.8c

# FIG.8d

# FIG.9

# FIG.10